# EUROPEAN PATENT APPLICATION

(11) **EP 3 263 818 A1**
(43) Date of publication of application: **03.01.2018**
(21) Application number: 17171461.1
(22) Date of filing: 17.05.2017
(51) Int. Cl.: E06B 7/10, F24F 13/18

(54) **WINDOW WITH VENTILATION UNIT**

(30) Priority: 14.06.2016 BE 201600103
(71) Applicant: Wilms, Erik, 2400 Mol (BE)
(72) Inventor: Wilms, Erik, 2400 Mol (BE)
(74) Representative: Philippaerts, Yannick

(57) **Abstract**

Assembly of a window (5) and a ventilation unit (7, 8), which assembly is provided for mounting in an opening in a wall (1) of a building, wherein the window consists of window profiles, outer dimensions of which are related to dimensions of the opening and wherein the assembly comprises a composite support profile (8) attached to a periphery of the window, and wherein the ventilation unit is connected to the window, wherein the composite support profile is elongate and adapted at both ends for connection to the wall.

## Description

The invention relates to an assembly of a window and a ventilation unit, which assembly is provided for mounting in an opening in the wall of a building, wherein the window consists of window profiles, outer dimensions of which are related to dimensions of the opening.

Windows consisting of window profiles are generally known and are provided in order to allow light into a building. The window profiles form the window, also referred to as window frame, in which glass can be placed. The window can be fixed or provided with hinges and/or other elements allowing opening of the window, whereby it is a multifunctional window. Such techniques are known and therefore not described in further detail in this description. In this description the term window profiles is a collective term for all profiles including hinges and/or other elements used to manufacture a window, be it fixed or multifunctional.

Ventilation openings can also be provided together with the windows in order to ventilate spaces in buildings. In accordance with recent trends and standards ventilation is becoming increasingly important. A space can be ventilated by providing a ventilation opening on a window. The ventilation opening can here comprise a flap which can be operated manually or automatically in order to influence the amount of air which can flow through the ventilation channel. Self-regulating flats thus exist which, depending on the difference between the air pressure outside and the air pressure inside, for instance as a result of wind, open to greater or lesser extent. A known drawback of such ventilation openings is that heat is not recuperated.

Other ventilation systems have been devised, such as a balance ventilation system, wherein the ventilation is actively controlled by allowing controlled inflow and outflow of air, wherein the inflow and outflow are held in balance by the balance ventilation system. Such a balance ventilation system typically comprises heat exchangers which allow heat exchange between the ingoing air and the outgoing air so as to thus ventilate in energy-efficient manner. A drawback of such a system is that a modified pipe network must be provided through the whole building in order to ventilate each space correctly. This is time-consuming and expensive, and for practical reasons often impossible in the case of renovation.

It is an object to provide a ventilation system which allows exchange of heat and which is easily placeable, particularly in a renovation project.

The invention provides for this purpose an assembly of a window and a ventilation unit, which assembly is provided for mounting in an opening in a wall of a building, wherein the window consists of window profiles, wherein the outer dimensions are related to dimensions of the opening and wherein the assembly comprises a composite support profile attached to a periphery of the window, and wherein the ventilation unit is connected to the window, wherein the composite support profile is elongate and adapted at both ends for connection to the wall.

The invention is based on the insight that combining a window and a ventilation unit results in a synergistic advantage in different areas. Only one opening will thus have to be provided in the wall during placing of the assembly of a window and ventilation unit. If window and ventilation unit were to be installed separately, two openings would also have to be provided. It will further be possible to finish the assembly of window and ventilation unit in considerably simpler manner because finishing profiles and boarding, traditionally made by a joiner, can be combined.

A composite support profile is provided on a peripheral edge of the window in order to connect the window to the ventilation unit. This composite support profile is elongate and adapted at both ends for connection to the wall. By connecting the composite support profile at both ends to the wall the composite support profile will function in respect of the window as support beam lying in the line of the wall. Because the opening in the wall of the building allows not only installation of the window but also building-in of the ventilation unit, the opening in the wall of the building, at least at the position of a part of the periphery of the window, will be larger than is essentially necessary for installation of the window. The window can hereby be connected along its whole periphery to the wall, so that transverse forces exerted on the window, for instance as a result of wind, can be absorbed more easily. It is a trend to make windows increasingly larger so that the lateral forces which must be absorbed by the window profiles also become increasingly greater. Fixed attachment of the window in the wall at regular distances over the whole periphery of the wall is preferred for this purpose. The composite support profile provides a support beam in respect of the window so that the window can also be attached to the wall at the position of the ventilation unit. At the position of the ventilation unit the window can be connected indirectly to the wall via the composite support profile. As a result the ventilation unit can be supported directly or indirectly by the window, and the whole can be constructed inexpensively and easily. The invention hereby provides for a ventilation system with heat recuperation which is easily mountable and can be applied in new buildings as well as in renovation situations.

The window preferably comprises a thermal barrier between an outer side and an inner side and the composite support profile spans the thermal barrier. Windows with a thermal barrier between outside and inside are frequently applied in order to improve insulation values. Such windows are then typically connected either via their inner side to the inside wall or connected via their outer side to the outside wall so as not to create any cold bridges. A good thermal barrier is maintained by applying a composite support profile to connect the ventilation unit to a periphery of the window because composite support profiles are poor conductors of heat. Connecting the ventilation unit to a periphery of the window hereby has no appreciable adverse effect on the insulating properties of the assembly.

The composite support profile preferably comprises connecting elements at both ends for connecting the support profile to the wall, preferably to an inside wall of the wall. The connecting elements can be provided in a material other than composite in order to connect the composite support profile at the ends to the wall. In a simple preferred embodiment the connecting elements can thus be provided as L-shaped components, wherein one leg of the L-shape is connected to the composite support profile and another leg of the L-shape is connected to the wall. Connection of the connecting element to the composite support profile is possible in different ways, for instance with known connecting elements such as screws, bolts, adhesives and welds. The connecting element can alternatively be connected in shape-compatible manner to the composite support profile so that the connecting element can be connected by virtue of its shape to the support profile. In a simple exemplary embodiment the composite support profile is provided with a groove, and the connecting element is shaped so as to engage in the groove, so that the position of the connecting element relative to the composite support profile is fixed at least in one or more directions of force. As further alternative the connecting elements are formed integrally with the composite support profile. The composite support profile is further fixed laterally to the wall where possible in order to maximize the strength of the connection.

The assembly preferably further comprises a sunblind case connected via a further composite support profile to an upper periphery of the window, wherein the further composite support profile is elongate and adapted at both ends for connection to the wall. Lateral guides are more preferably further attached here to an outer side of the window under the sunblind case for the purpose of guiding the sunblind. Hereby provided is an assembly which comprises a window, sunblind system and the ventilation unit which allows optimal and simple placing, wherein the attachment of the window in the window opening is optimal due to the composite support profile and the further composite support profile, and wherein the thermal barrier of the window is not adversely affected by the elements constructed around the window, such as the ventilation unit and the sunblind case. Hereby provided is an overall concept which can be applied in renovation as well as in new buildings in order to improve the energy-efficiency of a dwelling with the combination of a window, ventilation unit for ventilation and sunblind. Sunblind is defined here as one of a roller blind and screen.

In a first embodiment the composite support profile extends at the bottom of the window over a width which substantially corresponds to a window width and wherein the ventilation unit is provided under the support profile and extends over a width which is appreciably smaller than the window width. The ventilation unit is preferably connected directly to the composite support profile here so that the ventilation unit is connected indirectly, via the composite support profile, to the window. According to the first embodiment, the ventilation unit is provided under the window. The ventilation unit typically has a width here which is smaller than that of the window. This allows the opening provided in the wall for mounting of the window and the ventilation unit to be formed so that the window fits into a first section of the opening. The opening is further formed so that the ventilation unit fits into a second section of the opening which is narrower than the first section of the opening. Because the second section of the opening is narrower than the first section of the opening, the support profile can be placed in the first section of the opening so as to fully span the second section. The composite support profile thus forms a support beam at the bottom of the window which extends at least over the second section, and preferably over substantially the whole width of the window. The ventilation unit is suspended under the support profile in the second section of the opening.

On an outer side of the assembly the composite support profile is preferably provided with an upright support wall which is provided to press against an upright rear edge of a window sill in order to prevent water being able to flow between the window sill and the composite support profile. Having the composite support profile extend over substantially the full width of the window makes it possible for the composite support profile to also be adapted for further purposes and functions. The composite support profile can be provided with an upright support wall against which an upright rear edge of a window sill can press so that the window sill can be fixed via the composite support profile to the window. A seal is preferably provided here between the upright rear edge of the window sill and the upright support wall of the assembly for maximum prevention of flow of water between the window sill and the composite support profile.

According to a second embodiment of the invention, the composite support profile extends on an upright side of the window through a height which is appreciably smaller than the window height and which is substantially equal to a height of the ventilation unit connected laterally to the window. In this second embodiment the ventilation unit is provided on a side of the window. The ventilation unit has a height which is typically considerably smaller than the height of the window so that the opening provided in the wall comprises a first section which corresponds to the dimensions of the window and a second section which corresponds to the dimensions of the ventilation unit, wherein the second section has a height appreciably smaller than the height of the first section. The composite support profile is then provided so as to extend in the second section at the location of the separating line between the first section and the second section and to be connected there at both ends to the wall. The window can then be connected directly to the wall above and/or below the composite support profile. In this second embodiment a sunblind with lateral guides is typically provided, and the ventilation unit is preferably connected directly to the lateral guide so as to be connected indirectly to the window via the lateral guide.

The invention further relates to a building with at least one wall which is provided with at least one opening in which an assembly according to the invention is mounted.

The invention further relates to a method for mounting an assembly of a window and ventilation unit in an opening in a wall of a building, wherein the method comprises of:
- providing the opening in a wall of a building by providing an opening in an outside wall and providing a further opening in an inside wall, wherein a cavity wall extends between the outside and the inside wall;
- providing the assembly comprising the window consisting of window profiles, the outer dimensions of which are related to the dimensions of the opening in the outside wall, and comprising a composite support profile attached to a periphery of the window and wherein the ventilation unit is connected to the window;
wherein providing the further opening in the inside wall comprises of providing a first section of the further opening which corresponds to the dimensions of the window and providing a second section of the opening, connecting to the first section, which corresponds to the dimensions of the ventilation unit, and wherein the method further comprises of:
- inserting the assembly through the further opening in the inside wall; and
- connecting both ends of the composite support profile to the inside wall.

The method according to the invention is particularly optimized for renovation projects wherein the outside wall is finished sooner than the inside wall. In such a situation the inside wall is provided with an opening with two sections, a first section corresponding to the dimensions of the window and a second section corresponding to the dimensions of the ventilation unit. The relative position of the first and second sections is implicitly the same here as the relative position of the ventilation unit in relation to the window. The entity of the window with the ventilation unit can then be placed through the opening in the inside wall, after which the composite support profile can be connected to the inside wall. The window can further be connected to the inside wall in a conventional manner.

The method preferably further comprises of positioning the assembly in the wall such that the ventilation unit extends substantially in the cavity wall. Placing the ventilation unit in the cavity wall allows it to be fully concealed, and the distance for transporting air from outside to inside and vice versa is minimal.

The method preferably further comprises of providing an insulating material against the ventilation unit in order to seal the second section of the further opening. This results in further finishing of the inside wall.

The assembly preferably further comprises a sunblind case connected via a further composite support profile to the upper periphery of the window, and wherein providing the further opening in the inside wall further comprises of providing a third section, connecting to the first section, which corresponds to the dimensions of the sunblind case. An assembly with a window, ventilation unit and sunblind system can in this way be placed in one movement via the inside wall.

The invention will now be further described with reference to an exemplary embodiment shown in the drawing.

In the drawing:
figure 1 shows a wall of a building with an opening for a window;
figure 2 is an exploded view of an assembly of a window with further elements according to a preferred embodiment of the invention;
figures 3A and 3B show embodiments of a further opening in the inside wall;
figure 4 shows a cross-section of a wall with assembly;
figure 5 shows an embodiment of a composite support profile;
figure 6 shows a cross-section of a housing with a ventilation unit;
figure 7 is a perspective view of a housing with a ventilation unit;
figure 8 shows a cross-section of a wall with window sill;
figure 9 shows a side segment of a window sill assembly according to a preferred embodiment; and
figure 10 shows a longitudinal section of a window sill assembly.

The same or similar elements are designated in the drawing with the same reference numerals.

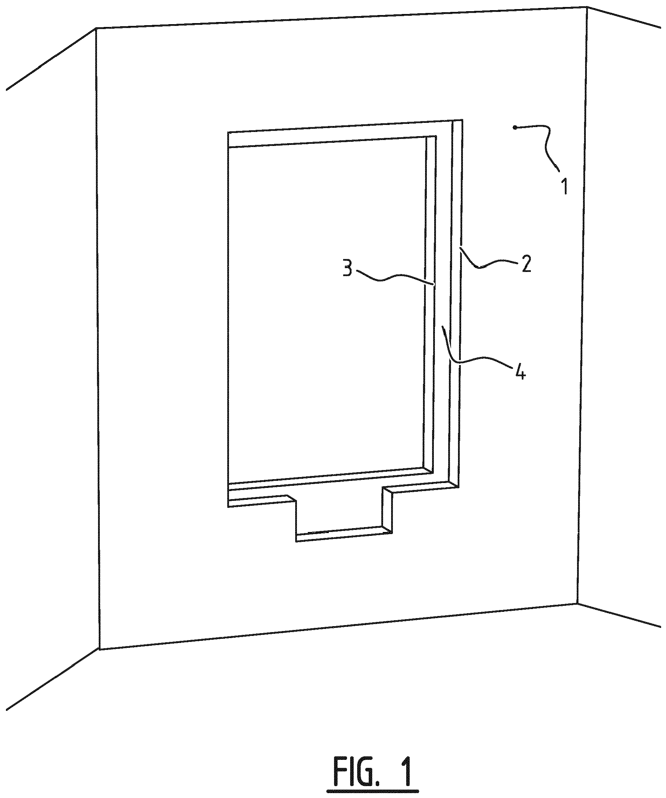

Figure 1 shows a wall 1 of a building in which an opening is provided for fitting a window. Windows are typically provided in order to allow light into a building. The windows are therefore typically provided in a wall 1 which has an inside wall 2 adjoining an interior of the building, and has an outside wall 3 provided on an outer side of the building. In order to limit heat loss a cavity wall 4 is typically provided between inside wall 2 and outside wall 3. The cavity wall is defined by a space between inside wall 2 and outside wall 3, this space being filled with air or with an insulating material. A thermal barrier is hereby created between inside wall 2 and outside wall 3 so that energy can be retained in the building. Reference is made in this description to inside wall 2, outside wall 3 and cavity wall 4, although it will be apparent here that this does not imply a traditional way of building. An outer wall 3 is defined as the outer shell of a building. Inside wall 4 is defined as the elements forming an inner shell of a building, wherein the inner shell is thermally insulated from the outer shell. Cavity wall 4 is defined as the space and/or the elements thermally separating the inner shell and the outer shell at least partially from each other. The outside wall can be formed from stone, brick metal, wood, plasterwork or other material suitable for forming an outer shell of a building. A cavity wall can be formed by insulating plates or foam fixedly connected to inside and/or outside wall. The cavity wall can alternatively be formed by a layer of air.

Recent legislation and modern techniques go a step further than creating a thermal barrier between outside wall 3 and inside wall 2 and also provide for an airtight foil in wall 1 with the theoretical purpose of airtight enclosing of the interior space. Because of this airtight foil air there is negligible, or at least no uncontrolled and appreciable exchange of air inside the building with air outside the building. This can further limit energy loss. This airtight foil has to be connected to the window when the window is placed in the opening.

It has been known for years to provide window profiles with which windows are constructed with a thermal barrier such that the profiles comprise an outer part and an inner part, wherein the outer part is provided so as to lie on the outside of the building and the inner part is provided so as to lie on the inner side of the building. Such window profiles are then mounted either with their outer part against outside wall 3 or with their inner part against inside wall 2. The thermal barrier provided between outside wall 3 and inside wall 2 can hereby be extended to the window. The thermal barrier can in this way take a continuous form so that cold bridges facilitating energy exchange from outside to inside the building, and vice versa, do not occur. It will be apparent here to the skilled person that, if both inner part and outer part of a window are placed on one of an outside wall 3 or inside wall 2, an undesirable heat exchange would be facilitated between either outside wall and inner part of the window profile or inside wall and outer part of the window profile so that a cold bridge occurs. The airtight foil provided in wall 1 is adhered against an edge of the window profile and connects airtightly against the window profile. A building with a window can be energy-optimized by providing a window in an opening of a building while making allowance for the aspects described above.

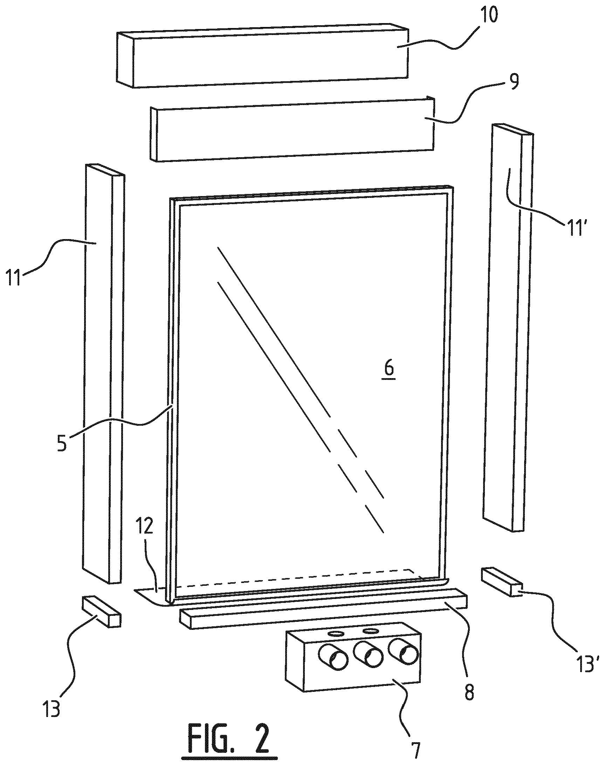

Figure 2 is an exploded view of a window 5 with added functionalities which is provided for the purpose of being built into the opening in wall 1 as shown in figure 1. Window 5 consists of window profiles. In mounted state the window profiles form the window, also referred to as window frame, in which glass 6 can be placed. The window can be fixed or be provided with hinges and/or other elements which allow opening of the window, whereby it is a multifunctional window. Such techniques are known and are therefore not described in further detail in this description. In this description the term window profiles is a collective term for all profiles including hinges and/or other elements used to manufacture a window, be it fixed or multifunctional.

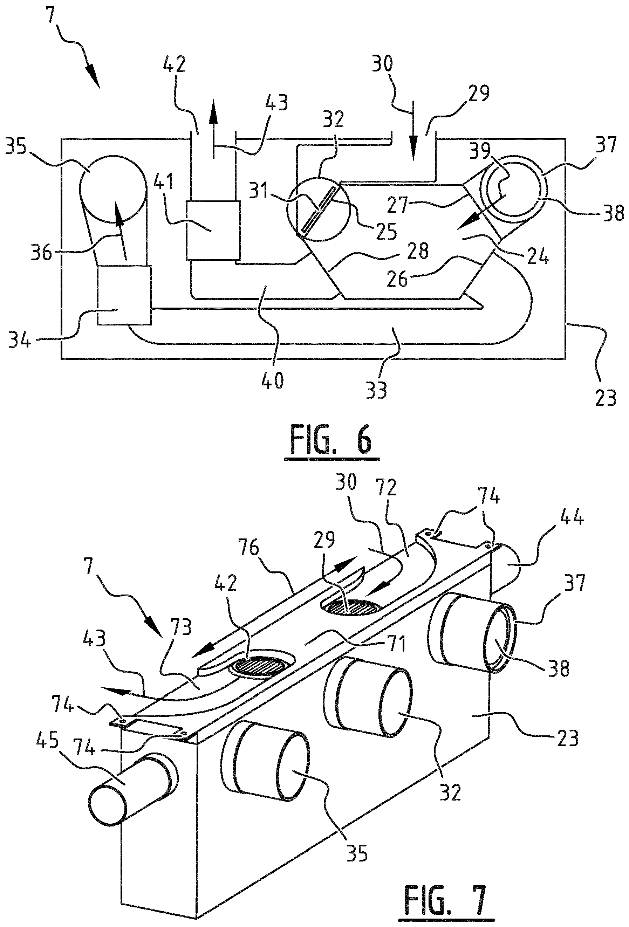

Figure 2 further shows a ventilation system 7 which will be discussed in further detail below with reference to figures 6 and 7. The ventilation system is shown as a ventilation unit and allows a forced controlled airflow from inside to outside and from outside to inside through wall 1. A plurality of ventilation units can be placed in a plurality of respective rooms of a building in order to together form the ventilation system of the building. Because each ventilation unit of the ventilation system operates individually, the ventilation system can be explained in this description by describing the operation of one ventilation unit. It will be apparent here that, while a plurality of ventilation units can operate independently, the skilled person can couple them operationally in order to obtain a predetermined operational interaction between the different ventilation units in the ventilation system. Each ventilation unit of the ventilation system is provided with a heat exchanger for energy exchange between the inflowing and outflowing air. The ventilation system can be deemed a local ventilation system. This is because a plurality of such ventilation units 7 can be provided in a building, for instance at a plurality of window openings in a plurality of rooms of the building, the operation of which is controllable separately of each other.

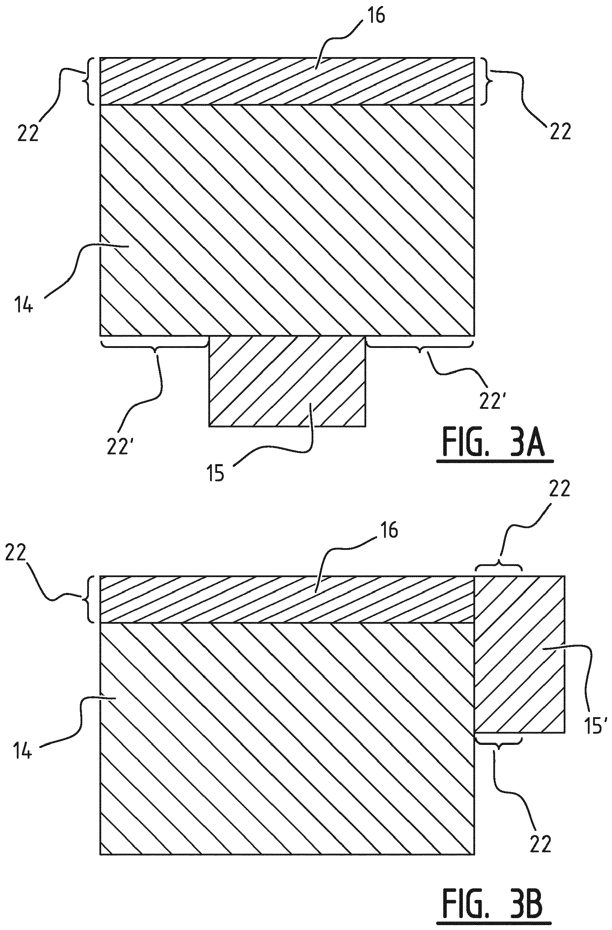

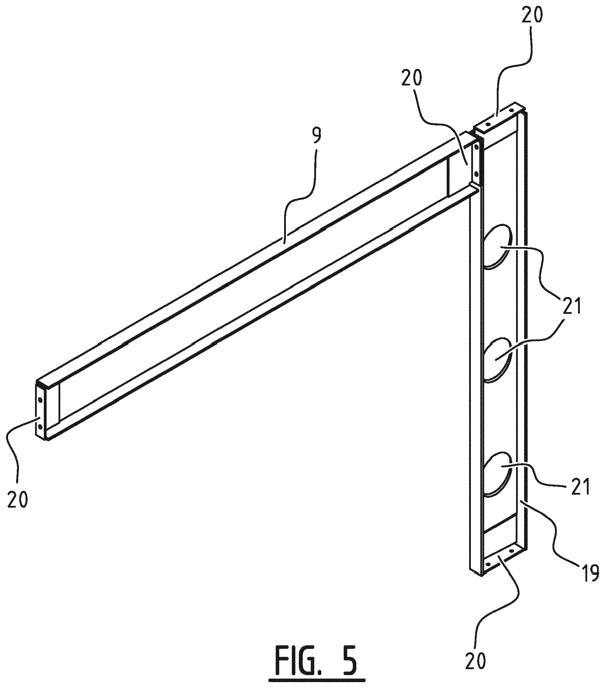

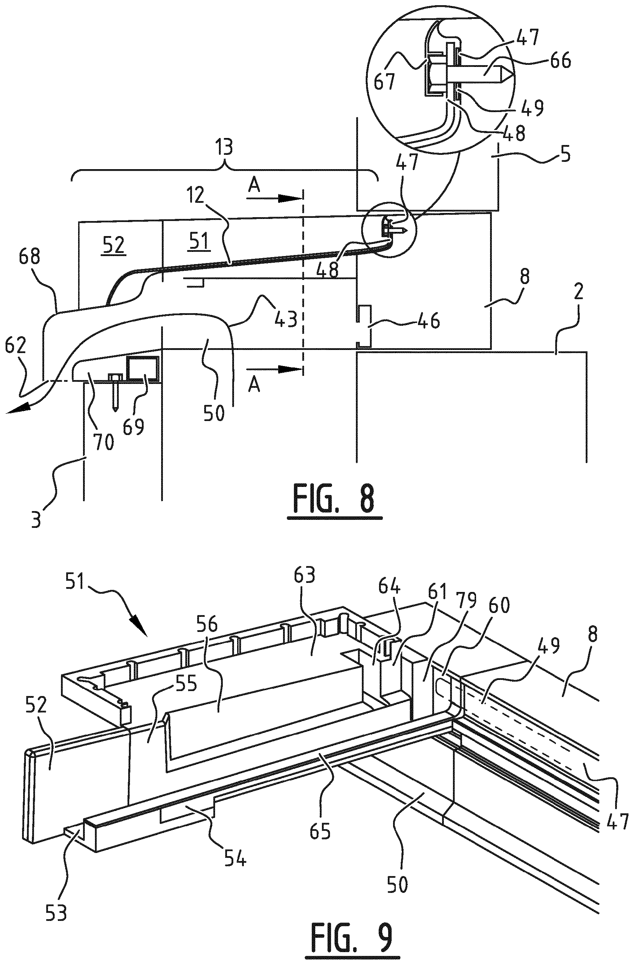

Figure 2 further shows a composite support profile 8. Composite support profile 8 is provided so as to be connected on the one hand to window 5 in order to support window 5 and to be connected on the other to ventilation unit 7 in order to bear the ventilation unit. Composite support profile 8 hereby forms an intermediate element between window 5 and ventilation unit 7. The composite support profile will be discussed in more detail below with reference to figure 3 and figure 5. The composite support profile is elongate and provided for the purpose of connection at both ends to wall 1. Window 5, which is connected with a part of its periphery to the composite support profile, can thus be connected via this composite support profile 8 to wall 1. The window will hereby be well able to withstand lateral forces exerted on the window, for instance as a result of wind blowing against the glass 6. In a preferred embodiment composite support profile 8 has a further function, i.e. that of forming the rear segment of the frame for a window sill assembly. This is further elucidated below with reference to figure 8.

Figure 2 shows a further composite support profile 9 provided for the purpose of mounting a sunblind case 10 above window 5. The further composite support profile 9 is elongate and provided for the purpose of connection at both ends to wall 1. The further composite support profile 9 can also be provided so as to connect to the inside wall via the sides lying against the inside wall. Lateral guides 11 are provided at the position of opposite upright profiles of window 5 in order to guide a sun screen or roller blind out of sunblind case 10. A sunblind case and lateral guides are known and therefore not further described in this description. Just as composite support profile 8, the further composite support profile 9 will also be elongate and provided for the purpose of connection at both ends to wall 1. Window 5, which is connected at an upper periphery to the further composite support profile, can thus be connected indirectly via this further composite support profile 9 to wall 1. The window will hereby be well able to withstand lateral forces exerted on the window, for instance as a result of wind blowing against the glass 6.

Figure 2 further shows a window sill 12 which, together with a window sill frame formed by rear segment 8 and two side segments 13 and 13', forms a window sill assembly for optimizing drainage on the outer side of frame 5. The window sill assembly with window sill 12 and side segments 13 and 13' are described in further detail below with reference to figures 8, 9 and 10.

Figures 3A and 3B show different forms of opening in an inside wall for mounting a window 5 with ventilation unit 7 and sunblind case 10. Assumed here is a renovation situation wherein as much as possible of outside wall 3 is preserved. Maximum preservation of outside wall 3 allows the aesthetic appeal of the outside wall to be retained, and finishing touches do not have to be made to outside wall 3.

Because window 5 with sunblind case 10 and the ventilation unit are preferably mounted as a whole in the opening, inside wall 2 will be provided with a further opening 18 comprising a plurality of sections. A first section 14 of the further opening substantially corresponds to the size of window 5, and preferably also to opening 17 in the outside wall. First section 14 of the further opening can if desired be made wider here than the width of opening 17 in outside wall 3 in order to conceal at least a part of the window profiles of window 5 from view when looking at outside wall 3 from outside the building.

A third section 16 of the further opening is provided on the upper side of first section 14 of the further opening. Providing this third section 16 enables sunblind case 10 to be inserted into cavity wall 4 via the opening in inside wall 2.

Further opening 18 further has a second section 15 which is adapted for the purpose of inserting ventilation unit 7 into cavity wall 4 via further opening 18. In the embodiment of figure 3A the second section 15 is provided under first section 14. Second section 15 is appreciably less wide than first section 14 since ventilation unit 7 is typically appreciably less wide than window 5. In a second embodiment shown in figure 3B the second section 15' is formed adjacently of an upright edge of first section 14. This allows ventilation unit 7 to be positioned adjacently of window 5. This embodiment is applied particularly when there is not sufficient space, or any space, for placing ventilation unit 7 under window 5. Examples of situations are windows extending at the bottom to a position close to a floor surface and windows with an underside placed substantially flush with a floor level, for instance windows used as passageway. By providing this second section 15 ventilation unit 7 can be inserted into cavity wall 4 via the opening in inside wall 2.

Figure 3A shows the positions 22 where the further composite support profile 9 can be connected to the inside wall. Figure 3A further shows positions 22' where composite support profile 8 is connected to the inside wall. Figure 3A shows here that composite support profile 8 has a width substantially equal to the width of first section 14 of the further opening such that composite support profile 8 spans the second section 15 of the further opening. In other words, composite support profile 8 can be laid on the upright walls of second section 15 of the further opening so as to thus cover second section 15. Composite support profile 8 hereby substantially forms the underside of first section 14 of the further opening. In an alternative embodiment wherein a window with ventilation unit is provided without sunblind, section 16 is not provided, and the opening in the inside wall will comprise only sections 14 and 15.

According to an alternative embodiment as shown in figure 3B, composite support profile 19 is positioned in second section 15' of the further opening between the positions 22. In other words, composite support profile 19 is not positioned at the bottom and in lying position but placed upright and at the position of a side wall of the window. In this embodiment the ventilation unit is also placed at this side wall of the window. The further composite support profile 9 can then be fixed between on the one hand composite support profile 19 in second section 15' and on the other the position 22 in third section 16 shown on the left-hand side of the opening of figure 3B. The openings as shown in figures 3A and 3B allow a window connected beforehand to the ventilation unit and/or sunblind case to be mounted via the inside wall. A maximum of the preparatory assembly operations can hereby be carried out elsewhere, for instance in a window factory, while the fitting steps at the construction site, i.e. in the building with wall 1 in which window 5 must be provided, are minimized. Not only does this have a positive effect on the construction time, the chance of incorrect assembly is also minimized. The skill and knowledge level required by persons placing the window in wall 1 can further also be minimal.

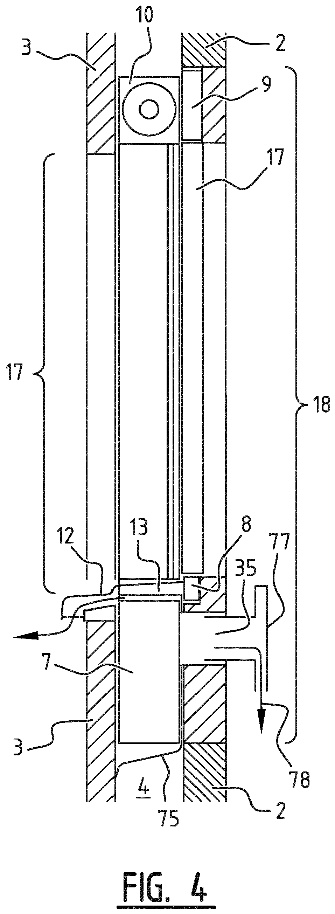

Figure 4 shows an upright cross-section of a wall with an opening in which a window has been placed. The figure shows how the wall has an inside wall 2 and an outside wall 3. Provided in the outside wall is an opening 17 substantially corresponding to the dimensions of window 5. Provided in inside wall 2 is a further opening 18 which has larger dimensions than those of window 5, i.e. the further opening 18 has, as described at length above, a first section 14, a second section 15 and a third section 16 for respective mounting of window 5, ventilation unit 7 and sunblind case 10. The figure also shows how a cavity wall is formed between inside wall 2 and outside wall 3. Figure 4 also illustrates how ventilation unit 7, sunblind case 10 and lateral guides 11 can extend wholly in the cavity wall.

In the embodiment of figure 4 substantially the whole cavity wall, as seen in the transverse direction thereof, is filled by ventilation unit 7, below window 5, and sunblind case 10 above window 5. This is the result of the depth of the cavity wall which in the embodiment of figure 4 corresponds to the overall depth of ventilation unit 7 and of sunblind case 10. This is a preferred situation which does not always occur in practice, and which is also not always necessary. When the cavity wall is deeper than the overall depth required for ventilation unit 7 and/or sunblind case 10, a space will occur between outside wall 3 and ventilation unit 7 and/or sunblind case 10. This space can be finished in traditional manner by means of external joinery. This space occurs particularly when window 5 is aligned at inside wall 2. Window 5 can alternatively be mounted deeper in the wall in order to minimize the space between outside wall 3 and the ventilation unit and/or sunblind case 10. Support elements can be provided for this purpose on inside wall 2 in order to support the window 5 when the window extends deeper into the wall, i.e. typically into the cavity wall.

In another situation the depth of the cavity wall is smaller than the overall depth of ventilation unit 7 and/or the sunblind case. In such a situation the ventilation unit and/or the sunblind case can be mounted partially in the cavity wall and partially in opening 18. Window 5 will then, as seen in the transverse direction of the wall, be situated closer to the inner side of the inside wall than shown in the embodiment of figure 4.

Figure 4 shows an optimal situation for mounting a window with additional functionalities which are embodied by elements added to window 5. Figure 4 thus shows window 5 and a ventilation unit 7 which is provided so as to allow air to flow in controlled manner from inside to outside and from outside to inside. The ventilation unit comprises a heat exchanger here so that energy can be recuperated. The ventilation unit comprises openings to an inside wall 2, one opening of which is shown in the figure and designated with reference numeral 35. Ventilation unit 7 will be discussed below in more detail with reference to figures 6 and 7. Ventilation unit 7 is connected to a composite support profile 8 which is further connected to window 5. Window 5 is in this way formed integrally with ventilation unit 7 and can be installed as one whole through the further opening 18. Ventilation unit 7 is provided with a watertight layer 75 at least on the side of inside wall 2 and of the underside. Because as elucidated in detail below pressure differences will occur as a consequence of forcing an airflow and because heat is exchanged in the ventilation unit, whereby condensation can occur, it is not inconceivable in practice that there will be leakage of condensed water from the ventilation unit. This water is prevented from flowing to the inside wall by watertight layer 75. The water is guided in the direction of outside wall 3 by watertight layer 75 so that it can flow from there to the outside. Damp patches on the inside wall are thus prevented, and insulation is prevented from becoming wet. Watertight layer 75 is preferably formed as a watertight foil extending from composite support profile 8 as far as outside wall 3, wherein the ventilation unit is situated on the outside wall side of the foil. As alternative to watertight layer 75 the ventilation unit can be provided in a housing, for instance of plastic, wherein the housing takes a substantially watertight form and comprises an outlet for water at the position of outside wall 3. As further alternative the housing is provided with a watertight coating so that a substantially watertight casing is obtained.

When the window is mounted in the wall, constant support profile 8 is connected to inside wall 2, for instance at connecting positions 22' as shown in figure 3A. Composite support profile 8 hereby forms a lower support beam for window 5 so that window 5 can rest on composite support profile 8 and is connected thereto so that at the position of a lower part of its periphery the window is connected indirectly to inside wall 2 via composite support profile 8. Window 5 can in this way optimally absorb lateral forces. Composite support profile 8 further forms a suspension element for ventilation unit 7 so that further support points for ventilation unit 7 in the wall are unnecessary. This makes mounting of the entity of ventilation unit, composite support profile and window 5 extremely simple.

Figure 4 further shows a sunblind case 10 which is placed in the cavity wall and held fixedly by a further composite support profile 9. The further composite support profile 9 can be connected to inside wall 2 at connecting positions 22 as indicated in figure 3A. Sunblind case 10 can hereby be positioned in the cavity wall. Sunblind case 10 can also be connected via the further composite support profile to window 5. The further composite support profile 9 hereby forms the connecting element between window 5 on the one hand and sunblind case 10 on the other. Just as in the case of ventilation unit 7, this has the advantage that window 5 can be mounted integrally together with sunblind case 10 in opening 18. The window can further be connected on its upper periphery to the wall via the further composite support profile, so enabling optimal absorption of lateral forces on the window. Typically extending under sunblind case 10 are lateral guides 11 for guiding the lateral sides of the sunblind. The sunblind can be formed here by a sun screen or by a roller blind. Such sunblind cases with lateral guides and screens and/or roller blinds are known and therefore not described in further detail in this description.

Window 5 is preferably further provided with a window sill 12 which can guide water and/or dirt to an outer side of outside wall 3. Window sill 12 extends from window 5 as far as outside wall 3. Window sill 12 is preferably connected at the position of window 5 to composite support profile 8. Composite support profile 8 hereby forms a rear segment of a frame forming part of a window sill assembly. Two side segments 13 are further provided. The window sill assembly is further elucidated in detail below with reference to figures 8, 9 and 10. Window sill 12 has at the position of window 5 a rear upward edge which is provided for the purpose of lying against an upright support wall 47 of composite support profile 8. The position of the window sill, at least in the transverse direction of the wall, is hereby determined when window sill 12 lies with its rear edge against the support wall of support profile 8. In this position window sill 12 rests with its sides on side segments 13, and the side segments are provided for the purpose of draining water to an outer side of the outside wall as will be further elucidated below. Each of the side segments 13 preferably further forms a lower finishing element of lateral guide 11.

Sunblind case 10, lateral guide 11, side segment 13 and ventilation unit 7 preferably have substantially the same overall depth such that the entity of window 5 with one or more of these said elements can be easily installed in an opening of a wall.

Figure 4 shows a situation of a window with elements wherein the relative position of the elements in relation to window 5 is selected so as to fit into an opening as shown in figure 3A, wherein composite support profile 8 extends under window 5 over substantially the whole width thereof.

Further shown in figure 4 is an example of a blow nozzle 77 which is provided at the position of the inside wall and which comprises channels for realizing an airflow 78 substantially parallel to the wall. Inflow and outflow can be realized here in opposite directions, for instance outflow downward and inflow upward. Flows are thus separated optimally from each other. Via blow nozzle 77 a direct horizontal airflow perpendicularly of the inside wall, which can readily be perceived as uncomfortable by a user or resident, is also avoided and converted to an airflow substantially parallel to the inside wall.

Figure 5 shows an alternative composite support profile 19 which is provided for the purpose of connection to window 5 at a relative position optimized for building into an opening as shown in figure 3B. The alternative support profile 19 extends here over a portion of an upright peripheral edge of window 5, and the alternative composite support profile 19 is provided so as to be connected to the inside wall at connecting positions 22 as shown in figure 3B. The further composite support profile 9 then extends between the inside wall on the one hand and the alternative composite support profile 19 on the other. In this embodiment ventilation unit 7 can be connected via composite support profile 19 to window 5. In this embodiment ventilation unit 7 will preferably be connected to lateral guides 6, which lateral guides 6 are connected to the window so that ventilation unit 7 is connected indirectly, via lateral guides 6, to the window. Composite support profile 9 will provide a strong connection here between window 5 and the inside wall.

The alternative composite support profile 19 is further provided with openings in order to allow the airflow and access to the filter in the ventilation unit. The openings are designated in figure 5 with reference numeral 21.

Figure 5 shows how the longitudinal ends of the alternative composite support profile 19 and the further composite support profile 9 are provided with connecting elements 20 for connecting the composite support profile to inside wall 2. These connecting elements 20 are formed in the embodiment as L-shaped components, wherein one part of the L-shape is connected to the composite support profile and another leg of the L-shape can be connected to the wall. Connection of the connecting element to the composite support profile is possible in different ways, for instance with screws, bolts, adhesives or welds. Alternatively or additionally, the connecting element can be shape-compatible with the composite support profile so that because of its shape the connecting element can be connected to the support profile. The composite support profile can be formed here with a groove, and the connecting element can be formed such that it can engage in the groove so as to at least partially fix the position of the connecting element relative to the composite support profile. According to an alternative embodiment, connecting elements 20 are integral and formed as one whole with the composite support profile.

Figure 6 shows a cross-section of a ventilation unit 7. Ventilation unit 7 comprises a heat exchanger 24, a first channel 33 and a second channel 40 allowing air to flow respectively from outside to inside and from inside to outside, a first air pump 34 and a second air pump 41 which together form the ventilation unit 7 and which are mounted in a housing 23. First channel 33 extends between a first opening 29 and a second opening 35. First opening 29 is formed in a side of housing 23 which adjoins an outer side of wall 1 when the housing is built into the wall. In the example of figure 6 opening 29 is formed in an upper wall of housing 23 of ventilation unit 7. First opening 29 is provided for the purpose of allowing flow of outside air into the building, this being illustrated in figure 6 with arrow 30. Provided in first channel 33 is a filter 31 for filtering the inflowing outside air which is preferably placed in order to filter the air before the inflowing air 30 flows through heat exchanger 24.

Heat exchanger 24 is of the air-air type, so that a heat exchange is possible between a first and a second airflow. Heat exchanger 24 comprises for this purpose a first inlet 25 and a first outlet 26 for allowing flow of a first airflow, and heat exchanger 24 comprises a second inlet 27 and a second outlet 28 for allowing flow of a second airflow. Heat exchanger 24 is provided here for the purpose of allowing crosswise flow of the airflows relative to each other in a manner such that heat exchange between the flows is optimized. Air-air heat exchangers are known and the details of this heat exchanger are therefore not described in further detail in this description. Each of the inlets 25, 27 and outlets 26, 28 can further be provided with airflow guides (not shown in figure 6) for guiding the airflow. The airflow guides are further provided, preferably at the position of inside wall 2, for visual finishing of the inlets and outlets.

First channel 33 is connected to first inlet 25 and first outlet 26 of heat exchanger 24 and second channel 40 is connected to second inlet 27 and second outlet 28 of heat exchanger 24 such that first channel 33 and second channel 40 cross over each other at heat exchanger 24. Energy is then exchanged in heat exchanger 24 between air flowing in first channel 33 on the one hand and the air flowing in second channel 40 on the other. Heat or cold can thus be recuperated.

The flow of air through first channel 33 is driven by a first air pump 34. The flow of air through second channel 40 is driven by a second air pump 41. First air pump 34 and second air pump 41 are preferably identical air pumps and can be driven synchronously or individually depending on the operational preferences for ventilation unit 7. Each air pump 34, 41 is preferably formed by an air pump producing minimal sound. An air pump is preferably chosen herefor which operates at a low rotation speed. A low rotation speed is defined here as a rotation speed lower than 1000 revolutions per minute (rpm), preferably lower than 500 rpm, more preferably lower than 300 rpm. Air pumps 34, 41 can be selected from air pumps which move air in an axial direction or in a radial direction, axial and radial being understood to mean relative to the primary rotation axis of the fan. Air pumps 34, 41 are preferably provided for radial displacement of air. Air pumps, including fans with radial or axial blades, are known and therefore not described in further detail in this description.

First channel 33 ends at a second opening 35 provided in a wall of housing 23 which, when ventilation unit 7 has been built into the wall, adjoins an interior of the building. In the exemplary embodiment of figure 6 second opening 35 is provided in the wall which lies parallel to inside wall 2. Air can flow through second opening 35 into the space of the building, this being designated in the figure with arrow 36.

Second channel 40 has a construction similar to first channel 33. Second channel 40 extends between third opening 37, which is preferably formed in the same wall of housing 23 as second opening 35. The third opening is more preferably positioned at a distance from second opening 35 which is greater than the sum of the diameters of second opening 35 and third opening 37, more preferably greater than twice the sum of the diameters of second opening 35 and third opening 37. Second opening 35 is alternatively placed on a first longitudinal side of housing 23, in figure 6 the left-hand side, and third opening 37 is placed on an opposite longitudinal side of housing 23, in figure 6 the right-hand side. There is therefore a maximum distance between second opening 35 and third opening 37, taking into account the size of housing 23.

Third opening 37 is provided for the purpose of allowing air flowing from inside to outside to flow into second channel 40, this being designated in figure 6 with arrow 39. Third opening 37 is further provided with a filter 38 for filtering the inflowing air. This filter 38 is easily accessible via opening 37. The air which flows via third opening 37 into second channel 40 flows through heat exchanger 24, more specifically through second inlet 27 and second outlet 28, via second air pump 41 to a fourth opening 42 in housing 23. Fourth opening 42 is preferably placed in the same wall of housing 23 as first opening 29. Via fourth opening 42 the air coming from inside can flow to the outside, this being designated in figure 6 with arrow 43.

Housing 23 further comprises a fifth opening 32 which is preferably formed in the same wall of housing 23 as second opening 35 and third opening 37. This fifth opening 32 is further positioned at the location of filter 31 for filtering the inflowing outside air. As a result this filter 31 is accessible via fifth opening 32. Fifth opening 32 is preferably positioned between second opening 35 and third opening 37. As a result of this positioning of the openings, in particular the positioning of third opening 37 and fifth opening 32, all filters present in ventilation unit 7, more specifically the filter for filtering the air flowing from inside to outside, i.e. filter 38, and the filter provided for filtering the air flowing from outside to inside, i.e. filter 31, can be replaced via inside wall 2. Filter 31 preferably comprises a carbon filter, more preferably an active carbon filter, which cleans incoming air. This makes maintenance of ventilation unit 7 as shown in figure 6 extremely simple. In addition, the electronics and/or controller in housing 23 are preferably accessible via fifth opening 32. A connector can be provided for this purpose in housing 23 at the location of fifth opening 32, via which connector a technician can connect the electronics and/or controller of the ventilation unit to an external diagnostic and/or programming device.

Figure 7 is a perspective view of ventilation unit 7 of figure 6. Figure 7 shows here how first opening 29 and fourth opening 42 are formed in an upper wall of housing 23. These openings can alternatively be formed in a rear wall, the rear wall being the wall which, in the mounted state of the ventilation unit, lies parallel to and adjacently of outside wall 3. Figure 7 further shows second opening 35, third opening 37 and fifth opening 32 which extend in the same wall of housing 23 and which are each provided with a pipe part. The pipe part facilitates finishing of inside wall 2 following placing of ventilation unit 7. For aesthetic reasons the second 35, third 37 and fifth 32 opening are preferably formed substantially symmetrically around an upright axis of symmetry.

Figure 7 further shows how further connections 44 and 45 can be provided for the purpose of connecting for instance an additional space for ventilating. For instance spaces not adjoining an outside wall, for instance a bathroom or storage space, can be ventilated by connecting these spaces to connections 44 and 45. It will be apparent on the basis of the description of figure 6 that connection 44 is coupled internally in housing 23 to opening 37 in order to suction in air from an additional space, and that connection 45 is coupled internally to opening 35 in order to blow fresh air (from outside) into the space. The use of these additional connections 44 and 45 is optional and provides the possibility of further extending the functionality of ventilation unit 7. Spaces not directly adjoining an outside wall can still be ventilated via pipes in the cavity wall.

Figure 7 further shows how a cover 71 is provided on ventilation unit 7. The ventilation unit is preferably formed as a cassette which can be fitted into and removed from the respective opening, and cover 71 is provided in order to secure the cassette. The cover provides airflow guides here, more specifically an inflow guide 72 and an outflow guide 73 which respectively guide inflowing air and outflowing air. Guides 72 and 73 hereby keep the inflowing air 30 and outflowing air 43 separate and preferably at a maximum distance 76 from each other, so that no circulation, or only a minimal circulation, occurs between outflowing air and inflowing air. Cover 71 is preferably provided with fastening elements 74 for fastening the cover 71. The cover is provided with connections for connecting guides 72 and 73 to openings 29 and 42 respectively, so that the air from/to the openings can flow through the airflow guides.

Figure 8 shows a cross-section of the wall at the position of window sill 12. Figure 8 shows here a portion of inside wall 2 and a portion of outside wall 3. The cross-section is situated adjacently of the second section and in the first section of the further opening, for instance at the connecting position 22' in figure 3A. As a result figure 8 shows how support profile 8 lies on inside wall 2 at the connecting position 22'. Support profile 8 can be further connected here to inside wall 22' in different ways, for instance by screwing, adhesion or other techniques (not shown). The figure further shows how window 5 is placed on composite support profile 8. Window 5 can be placed here with outer part as well as with an inner part on composite support profile 8 without this having any appreciably adverse effect on the insulating action. This is because a composite support profile 8 is typically a poor conductor of heat such that composite support profile 8 does not form any cold bridge worthy of mention between the inner part and the outer part of window 5 when the inner part and the outer part are both placed on composite support profile 8. Alternatively (not shown) window 5 can be connected with only the inner part to composite support profile 8.

The figure further shows how composite support profile 8 has a groove 46 for connecting ventilation unit 7 to composite support profile 8. Groove 46 is only one exemplary embodiment with which ventilation unit 7, in particular housing 23 thereof, can be connected to composite support profile 8. Ventilation unit 7 can alternatively be connected by screwing, adhesion or other techniques to composite support profile 8. Collection by means of groove 46 has the advantage that the position of ventilation unit 7 can be easily changed in the width direction of the window by sliding ventilation unit 7 in groove 46. This allows those placing window 5 with ventilation unit 7 to adapt the position of ventilation unit 7 to the position of the opening as shown in figure 3A. Ventilation unit 7 can further be connected directly or indirectly to groove 46. In one embodiment two side elements (not shown) are connected directly to groove 46 and ventilation unit 7 is formed as a cassette which fits between the two side elements. In another embodiment ventilation unit 7 is connected directly to groove 46. In a further embodiment ventilation unit 7 is connected via an intermediate element to groove 46.

Window sill 12 is shown in figure 8 in the operative position, which is also referred to as the second position of window sill 12. The operative position of window sill 12 is the position of window sill 12 relative to window of 5 and outside wall 3 at which water and/or dirt is guided by window sill 12 to an outer side of outside wall 3. More specifically, water and/or dirt can fall against window 5 and flow downward along the window 5 and water and/or dirt can come to lie between window 5 and an outer side of outside wall 3. Window sill 12 is provided in its operating position so as to guide such water and dirt to an outer side of outside wall 3 so that no appreciable quantity of water and/or dirt can enter the cavity wall and come to lie on inside wall 2. Window sill 12 has this purpose a rear upward edge 48. The rear upward edge 48 is provided for the purpose of pressing against an upright support wall 47 of composite support profile 8. Window sill 12 is typically pressed with its rear upward edge 48 against the upright support wall 47 by means of screws or bolts 66. A rear seal 49 is preferably further provided between upright edge 48 and upright support wall 47. The rear seal 49 can for instance be formed by a strip of rubber. The skilled person will appreciate, on the basis of the function and the mechanical structure, which materials and forms are suitable as seal between upright edge 48 and support wall 47. Because of this construction the composite support profile 8 forms the rear segment of the frame of the window sill assembly. A cap 67 can further be provided to prevent as far as possible water that flows downward along the window from flowing behind window sill 12. Cap 67 is preferably formed as a profile with a flexible tongue which extends upward so as to press against the window. Cap 67 is preferably further provided so as to be attached, for instance by clamping, to the one or more heads of screws 66.

The window sill assembly comprises a plurality of elements, including the window sill 12 and a frame comprising at least a rear segment 8 and two side segments 13, which elements co-act to guide the water and dirt to an outer side of outside wall 3. Composite support profile 8 forms the rear segment of the frame in the window sill assembly. Composite support profile 8 is therefore multifunctional when both ventilation unit 7 and window sill 12 are connected thereto.

Composite support profile 8 of the embodiment of figure 8 further has a support surface or protrusion for supporting a rear part of window sill 12. In the mounted position of window sill 12 the support surface or protrusion extends under upright support wall 47 such that, when window sill 12 is pressed with its upright edge 48 against support wall 47, window sill 12 cannot drop downward, i.e. window sill 12 is supported on its rear side by the support surface or protrusion. Window sill 12 is preferably mounted by sliding window sill 12 in the direction of support wall 47, and wherein the sliding is oriented in a direction substantially the same as the plane of window sill 12. Assembly and disassembly of window sill 12 can alternatively take place by rotating window sill 12 around the rear upward edge 48. During such an assembly the front side of window sill 12 can be raised such that upward edge 48 is moved away from the upright support wall 47 by the rotation of window sill 12. Window sill 12 can hereby be taken out of its operating position. This position is also referred to as the first position of window sill 12. Taking window sill 12 out of its operating position and in the first position provides access to cavity wall 4. It is advantageous, particularly when a ventilation unit 7 is mounted in the cavity wall, to have relatively simple access to the cavity wall so as to be able to carry out maintenance or repair work on the ventilation unit.

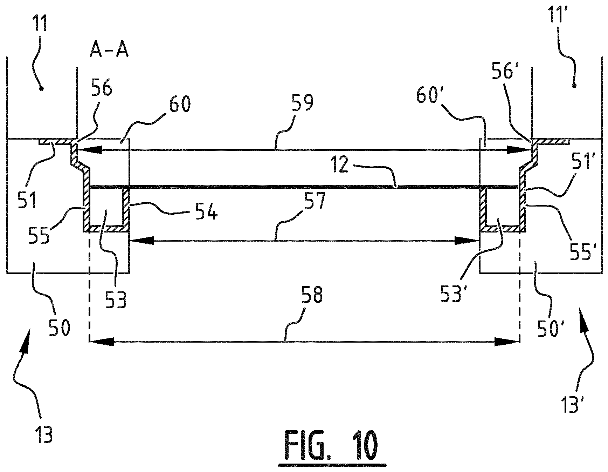

The side segments of the frame of the window sill assembly are placed at the location of the lateral sides of window sill 12 in order to support window sill 12. Side segment 13 comprises a channel extension piece 52. Side segment 13 is provided for placing in the cavity wall. Because water and/or dirt have to be guided to an outer side of outside wall 3, a channel extension piece 52 is provided which extends through the opening in outside wall 3. Further details of side segment 13 will be given with reference to figures 9 and 10.

The front side of window sill 12, also referred to as the nose of window sill 12, extends over outside wall 3. Window sill 12 can extend here directly and without auxiliary elements over outside wall 3. Alternatively, as shown in figure 8, outside wall 3 is provided with window sill nose 68, for instance a metal profile, which is fixed to the outside wall such that the front side of window sill 12 can rest on window sill nose 68. Window sill nose 68 is more preferably provided with perforations 62. The perforations are preferably positioned on an underside of the overhang over the outside wall. Perforations 62 are hereby not visible in a front view of the outside wall. Perforations 62 allow an airflow between the cavity wall and the ambient air. This is particularly relevant when a ventilation unit 7 is provided, as described at length above, with openings in an upper wall of the ventilation unit, which openings are then provided to supply and discharge outside air. The hereby created airflow is indicated with arrow 43 in figure 8. It will be apparent here that one or more baffles (not shown) can be provided between openings 29 and 42 of ventilation unit 7 and window sill 12 such that there is maximum separation between the discharged air and the supplied air until the air is carried outside via perforations 62. No notable mixing between the first and the second airflow thus occurs in the cavity wall. Window sill nose 68 is preferably attached to the outside wall via a mounting accessory 69. This mounting accessory 69 can be attached at a predetermined height relative to the opening in the inside wall via a screw or adhesive or other fixing mechanism. A further mounting accessory 70 can optionally be provided as intermediate element for placing between mounting accessory 69 and window sill nose 68. In an alternative embodiment, wherein ventilation unit 7 is mounted on a side of the window, the lateral guide can be provided with openings to allow flow of air on the outer side of the wall. The side wall of the housing of the ventilation unit at the position of the lateral guide will therefore be deemed as the side related to the outer side of the wall.

Figure 9 shows side segment 13, preferably formed as a metal finishing piece 51. The metal finishing piece 51 is preferably lacquered or provided with a finishing layer which is the same as the lacquer or finishing layer of lateral guide 11. Side segment 13 can alternatively be formed integrally, for instance milled from a metal block.

The side segment has a channel 53. Channel 53 is provided so as to allow water and/or dirt to flow in the direction of an outer side of outside wall 3. Channel 53 is for this purpose formed so as to drain from the window in the direction of the outer side of the outside wall. Channel 53 is then typically extended as shown in figure 9 with a channel extension piece 52. Channel 53 has an inner upright edge 54 and an outer upright edge 55. Inner upright edge 54 and outer upright edge 55 substantially define the width of channel 53. Inner upright edge 54 preferably has less high a form than outer upright edge 55. The result hereof, as shown in figure 10, is that window sill 12 can be laid on the inner upright edges 54 and 54' and then extends between outer upright edges 55, 55'. This is further elucidated below with reference to figure 10. The side segment further has a wall part of upper section 56 which is positioned such as to allow simple upward rotation of window sill 12 out of its operating position. Outer upright edges 55 can, as shown in figure 9, comprise an offset which has the function of creating a minimal space between window sill 12 and outer upright edges 55. This allows simple drainage of water from window sill 12 to channel 53. This offset then serves as stop for the window sill for the purpose of centering the window sill in its optimal position.

Side segment 13 preferably comprises a rear wall 60. In mounted position rear wall 60 preferably lies in line with an upright support wall 47 as shown in figure 8. The result hereof is that upward rear edge 48 of window sill 12 lies against rear wall 60 so that water and/or dirt can be optimally discharged to an outer side of outside wall 3. Inner upright edge 54 is provided here with a lateral seal 65 which extends over inner upright edge 54 and which continues on over rear wall 60, in line with inner upright edge 54, as far as an upper side of rear wall 60. When window sill 12 is mounted, an overlap will hereby occur between the rear seal 49, which lies against upright support wall 47 and rear wall 60, and the lateral seal 65 which extends as far as an upper side of rear wall 60. The connection of the window sill to the corner between side segment and rear segment is made optimally watertight by this overlap of lateral seal 65 with rear seal 49. In figure 9 the rear seal 49 is illustrated with broken lines so that the overlap at the position of rear wall 60 is visible.

Side segment 13 further comprises a rear side wall 61. Side segment 13 can further be provided with a sunblind groove 64. The bottom slat of the sun screen or the bottom lamella of a roller blind can be received in sunblind groove 64 when the roller blind or the sun screen is lowered. The roller blind can thus be lowered substantially onto window sill 12 so that an optimal aesthetic whole is obtained. The side segment further comprises a drain tray 63 which drains water in side segment 13 to channel 53. When lateral guides are provided with gratings for supply and discharge of air to and from the ventilation unit, these gratings could, in the case of torrential rain, admit water into the guide. By providing side segment 13 with a drain tray 63 which drains to channel 53, water entering the lateral guide can be guided via drain tray 63 and channel 53 to an outer side of the outside wall.

Figure 9 further illustrates how composite support profile 8 is provided with an end piece 50. This end piece can be formed from composite, but can also be formed from a plastic or metal. End piece 50 forms a stop for composite support profile 8, which typically takes a hollow form, so that airflow cannot occur through the hollow composite support profile 8. End piece 50 can further be optimized for connection to side segment 51 so that the side segment is connected via end piece 50 to composite support profile 8. End piece 50 is preferably also taken into account when determining the length of composite support profile 8.

Figure 10 shows a left and a right side segment 13, 13' respectively. Side segments 13 and 13' are preferably symmetrical in mounted position, i.e. plane symmetrical relative to a plane extending upward and transversely relative to the wall between side segments 13 and 13'. Figure 10 shows a section A-A, the position of which is shown in figure 8.

Figure 10 shows an alternative embodiment wherein each side segment has a main body on which a finishing piece 51 is provided. The principles shown in figure 10 likewise apply for finishing pieces 51 which (without main body) form side segment 13 as shown in figure 9. Figure 10 also shows channel 53 with inner upright edge 54 and outer upright edge 55. It will be apparent from the figure that the elements in the side segment on the left-hand side of the figure are designated with reference numerals without accent while corresponding elements in the side segment shown on the right-hand side are designated with corresponding reference numerals with an accent.

Figure 10 makes clear how the distance between inner upright edges 54 and 54', which distance is designated in the figure with arrow 57, is smaller than the width of window sill 12 such that window sill 12 can be supported by inner upright edges 54 and 54'. The window sill then lies with its sides on these inner upright edges 54, 54'. Outer upright edges 55 extend higher than inner upright edges 54 and have a width 58 between outer upright edges 55, 55' which is substantially equal to the width of window sill 12. Window sill 12 can hereby be positioned between these outer upright edges 55 and 55'. The position of window sill 12, in particular in the width direction of the window, is hereby determined. The figure further shows how the upper section of side segments 13 has a wall 56 which is placed such that the intermediate distance 59 between these walls 56 and 56' is greater than the width of window sill 12. Window sill 12 is hereby given the space to be moved upward in a simple manner out of its operating position. This makes assembly and disassembly of window sill 12 considerably simpler. Damage to side segment 13 or window sill 12 or lateral guides 11 is further minimized because window sill 12 has sufficient space during assembly and so does not have to scrape against these elements.

Three sections can be distinguished in side segment 13, viz. a lower section at the position of lower upward edge 54, wherein a distance 57 between the opposite lower sections is smaller than the width of window sill 12, an upper section substantially defined by wall parts 56 with an intermediate distance 59 between walls 56 of the upper section which is appreciably larger than the width of window sill 12, and an intermediate section lying between the lower section and the upper section which is defined by at least a part of outer upright edges 55 of channel 53, and wherein there is a distance 58 between opposite intermediate sections which is substantially equal to the width of window sill 12. Water and/or dirt coming to lie on a side of window sill 12 can be guided either to the outer side of the outside wall by window sill 12 or enter channel 53 via the side of window sill 12, wherein the water is then guided via channel 53 to an outer side of outside wall 3. This construction of the window sill assembly with the preferred features in the figures and described above guarantees optimal operation of the window sill, wherein the window sill is optimized to give access to cavity wall 4 in a simple manner, and wherein in an operating position of window sill 12 the window sill is optimized so as to guide water and/or dirt to an outer side of outside wall 3. Water and/or dirt which comes to lie at a rear edge of window sill 12 or at a side of window sill 12 are also guided correctly here to an outer side of outside wall 3.

In the embodiment where the ventilation unit is positioned under the window the composite support profile has a width substantially equal to the distance 57 between the opposite lower sections. The window sill is then wider than the composite support profile so that the window sill protrudes relative to the composite support profile. This allows the protrusion of the window sill to press against the side segments, more specifically the rear wall thereof, so that an overlap occurs on either side of the window sill between the rear seal and the lateral seal. Rear wall 60 preferably fits substantially seamlessly against support profile 8, more specifically against upright support wall 47, so that rear seal 49 can prevent water flowing behind the window sill at the location of the transition.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

### Key to the figures

- 1.: wall
- 2.: inside wall
- 3.: outside wall
- 4.: cavity wall
- 5.: window/window profiles
- 6.: glass
- 7.: ventilation unit
- 8.: composite support profile + rear segment of frame
- 9.: further composite support profile
- 10.: sunblind case
- 11.: lateral guide
- 12.: window sill
- 13.: side segment of frame
- 14.: first section of further opening in inside wall
- 15.: second section of further opening in inside wall
- 16.: third section of further opening in inside wall
- 17.: opening in outside wall
- 18.: further opening in inside wall
- 19.: alternative composite support profile
- 20.: connecting element
- 21.: openings
- 22.: connecting position of connecting element
- 22'.: connecting position of composite support profile
- 23.: housing
- 24.: heat exchanger
- 25.: first heat exchanger inlet
- 26.: first heat exchanger outlet
- 27.: second heat exchanger inlet
- 28.: second heat exchanger outlet
- 29.: inlet first channel (first opening)
- 30.: inflowing air outside → inside
- 31.: filter inflowing outside air
- 32.: fifth opening
- 33.: first channel
- 34.: first air pump
- 35.: second opening (outflow outside → inside)
- 36.: outflowing air outside → inside
- 37.: third opening (inflow inside → outside)
- 38.: filter inflowing inside air
- 39.: inflowing inside air
- 40.: second channel
- 41.: second air pump
- 42.: fourth opening (outflow inside → outside)
- 43.: outflowing air inside → outside
- 44.: additional connection inside → outside
- 45.: additional connection outside → inside
- 46.: groove for connection to housing of ventilation unit
- 47.: upright support wall
- 48.: rear upward edge
- 49.: rear seal
- 50.: end piece composite support profile
- 51.: aluminium finishing piece side segment
- 52.: channel extension piece
- 53.: channel
- 54.: inner upright edge
- 55.: outer upright edge
- 56.: wall upper section
- 57.: distance between side segments at lower section
- 58.: distance between side segments at intermediate section
- 59.: distance between side segments at upper section
- 60.: rear wall
- 61.: rear side wall
- 62.: perforations
- 63.: drain tray
- 64.: sunblind groove
- 65.: lateral seal
- 66.: screw
- 67.: cap
- 68.: window sill nose
- 69.: mounting accessory
- 70.: further mounting accessory
- 71.: cover
- 72.: inflow guide
- 73.: outflow guide
- 74.: attaching element
- 75.: foil/water barrier
- 76.: distance between inflow and outflow
- 77.: blow nozzle
- 78.: airflow
- 79.: offset of outer upright edge

## Claims

1. Assembly of a window and a ventilation unit, which assembly is provided for mounting in an opening in a wall of a building, wherein the window consists of window profiles, outer dimensions of which are related to dimensions of the opening and wherein the assembly comprises a composite support profile attached to a periphery of the window, and wherein the ventilation unit is connected to the window, wherein the composite support profile is elongate and adapted at both ends for connection to the wall.

2. Assembly as claimed in claim 1, wherein the composite support profile comprises connecting elements at both ends for connecting the support profile to the wall, preferably to an inside wall of the wall.

3. Assembly as claimed in claim 1 or 2, wherein the window comprises a thermal barrier between an outer side and an inner side and wherein the composite support profile spans the thermal barrier.

4. Assembly as claimed in any of the foregoing claims, wherein the assembly further comprises a sunblind case connected via a further composite support profile to an upper periphery of the window, wherein the further composite support profile is elongate and adapted at both ends for connection to the wall.

5. Assembly as claimed in claim 4, wherein lateral guides are attached to an outer side of the window under the sunblind case for the purpose of guiding the sunblind.

6. Assembly as claimed in any of the foregoing claims, wherein the composite support profile extends at the bottom of the window over a width which substantially corresponds to a window width and wherein the ventilation unit is provided under the support profile and extends over a width which is appreciably smaller than the window width, and wherein the ventilation unit is connected directly to the composite support profile so that the ventilation unit is connected indirectly, via the composite support profile, to the window.

7. Assembly as claimed in claim 6, wherein on an outer side of the assembly the composite support profile is provided with an upright support wall which is provided to press against an upright rear edge of a window sill in order to prevent water being able to flow between the window sill and the composite support profile.

8. Assembly as claimed in claim 7, wherein a seal is provided between the upright rear edge of the window sill and the upright support wall of the assembly.

9. Assembly as claimed in claim 5, wherein the composite support profile extends on an upright side of the window through a height which is appreciably smaller than the window height and which is substantially equal to a height of the ventilation unit connected laterally to the window and wherein the ventilation unit is connected directly to the lateral guides so that the ventilation unit is connected indirectly, via the lateral guide, to the window.

10. Building with at least one wall which is provided with at least one opening in which an assembly as claimed in any of the foregoing claims is mounted.

11. Method for mounting an assembly of a window and a ventilation unit in an opening in a wall of a building, wherein the method comprises of:
- providing the opening in a wall of a building by providing an opening in an outside wall and providing a further opening in an inside wall, wherein a cavity wall extends between the outside wall and the inside wall;
- providing the assembly comprising the window consisting of window profiles, outer dimensions of which are related to dimensions of the opening in the outside wall, and comprising a composite support profile attached to a periphery of the window and wherein the ventilation unit is connected to the window;
wherein providing the further opening in the inside wall comprises of providing a first section of the further opening which corresponds to the dimensions of the window and providing a second section of the further opening, connecting to the first section, which corresponds to the dimensions of the ventilation unit, and wherein the method further comprises of:
- inserting the assembly through the further opening in the inside wall;
- connecting both ends of the composite support profile to the inside wall.

12. Method as claimed in claim 11, further comprising of connecting the window to the inside wall.

13. Method as claimed in claims 11-12, wherein the method further comprises of positioning the assembly in the wall such that the ventilation unit extends substantially in the cavity wall.

14. Method as claimed in any of the claims 11-13, wherein the method further comprises of providing an insulating material against the ventilation unit in order to seal the second section of the further opening.

15. Method as claimed in any of the claims 11-14, wherein the assembly further comprises a sunblind case and a further composite support profile, and wherein providing the further opening in the inside wall further comprises of providing a third section, connecting to the first section, which corresponds to the dimensions of the sunblind case.
